# EUROPÄISCHE PATENTSCHRIFT

(11) **EP 0 978 220 B1**
(45) Veröffentlichungstag und Bekanntmachung des Hinweises auf die Patenterteilung: **22.01.2003**
(21) Anmeldenummer: 98919218.2
(22) Anmeldetag: 03.04.1998
(51) Int. Cl.: H05B 33/02, H05B 33/10, H05B 33/12, G09F 13/22

(54) **KUNSTSTOFF-FORMKÖRPER MIT INTEGRIERTEM OPTOELEKTRONISCHEN LEUCHTELEMENT**
PLASTIC SHAPED BODY WITH AN INTEGRATED OPTOELECTRONIC LUMINOUS ELEMENT
CORPS MOULE EN PLASTIQUE A ELEMENT LUMINEUX OPTOELECTRONIQUE INTEGRE

(30) Priorität: 26.04.1997 DE 19717740
(43) Veröffentlichungstag der Anmeldung: 09.02.2000
(73) Patentinhaber: Schönberg + Cerny GmbH, 1151 Wien (AT)
(72) Erfinder: CZAK, Christian, A-1130 Wien (AT)
(74) Vertreter: Riebling, Peter, Dr.-Ing.
(86) Internationale Anmeldenummer: EP9801958
(87) Internationale Veröffentlichungsnummer: WO98049871

(56) Entgegenhaltungen:
- WO-A-94/14180
- DE-A- 4 430 907
- DE-C- 3 840 542

## Beschreibung

Gegenstand der Erfindung ist ein Kunststoff-Formkörper mit einem oder mehreren integrierten, optoelektrisch aktiven Leuchtfeldern mit mindestens einer im Bereich der Leuchtfelder angeordneten transluzenten und kaltreckbaren, dreidimensional verformten Kunststoff-Folie, auf deren Rückseite eine leitfähige Schicht als transparente Deckelektrode aufgebracht ist, die rückseitig mindestens stellenweise mit einer Elektrolumineszenz-Schicht beschichtet ist und von einer Isolationsschicht abgedeckt ist, hinter der eine Rückelektrode aus einer leitfähigen Schicht aufgedruckt ist, die ihrerseits von einer Isolierschicht abgedeckt ist.

Ein ähnlicher Kunststoff-Formkörper ist mit der WO 94/14180A1 bekannt geworden.

Es wird jedoch lediglich ein Kunststoff-Formkörper gezeigt, der auf einer ggf. dreidimensional verformten Kunststoff-Folie Leuchtfelder ausbildet, wobei die Kunststoff-Folie an ihrer Innenseite nicht bedruckt ist. Die Leuchtfelder dienen deshalb als reine Beleuchtungselemente, die einen separaten, über der dreidimensional verformten Folie angeordneten und bedruckten, Formkörper von innen her beleuchten.

Mit der Anordnung von zwei verschiedenen Formkörpern, von denen der eine bedruckt ist und der andere die Leuchtfelder trägt, ist ein großer Herstellungsaufwand verbunden. Überdies ergibt sich ein unschöner Gesamteindruck, weil die im zweiten Formkörper angeordneten, bedruckten Felder, die von dem darunter liegenden Formkörper erleuchtet werden, einen hohen Verlust von Leuchtdichte zeigen.

Darüber hinaus ergibt sich ein Verlust an Brillanz, weil die Druckfelder lediglich - in herkömmlicher Art wie bei Glühlampen - von unten her erleuchtet werden, nicht aber von der Seite.

Überdies muss der die Bedruckschicht tragende zweite Formkörper noch als separates Teil aufwendig hergestellt werden, und die Bedruckschicht muss durch eine weitere Schutzschicht vor Verletzungen geschützt werden.

Es ist im übrigen eine dreidimensionale Verformung dieses Formkörpers mit geringen Krümmungsradien nicht möglich, weil die Deckelektrode als befutterte, transparente ITO-Folie ausgebildet ist, die bekannterweise bei Verformung über enge Krümmungsradien einreißt.

Im übrigen erhält der bekannte Formkörper seine mechanische Stabilität nur durch die Zuordnung des weiteren Formkörpers, der die Bedruckschicht trägt. Es fehlt jedoch dem die Leuchtfelder aufweisenden Formkörper an einer Eigenstabilität.

Mit dem Gegenstand der DE 38 40 542 C2 ist ein weiterer, dreidimensional verformbarer, Formkörper bekannt geworden, der an seiner Rückseite eine Druckschicht trägt. Er wird auch durch Hinterspritzen mit einem thermoplastischen Kunststoff mechanisch verstärkt.

Es fehlt jedoch die Anordnung von entsprechenden Leuchtelementen an diesem Körper. Entsprechend der technischen Lehre der WO 94/14180A1 ist deshalb ein aus der
DE 38 40 542 C1 bekannter Formkörper nur geeignet, als zweiter Formkörper über den die Leuchtfelder der WO 94/14180A1 tragenden Formkörper angeordnet zu werden.

Es fehlt an einer Integration beider Formkörper ineinander.

Aus der DE 44 30 907 A1 ist eine dreidimensionale Elektrolumineszenzanzeige auf Basis einer in ein dreidimensionales Gebilde integrierten Elektrolumineszenzlampe bekannt. Dabei werden Elektrolumineszenzlampen ganzstückig angeformt und werden diese bereits vorgeformt. Nachteilig dabei ist die getrennte Gestaltung der besagten lichtdurchlässigen Schicht und der Elektrolumineszenzlampe, sowie deren exakte Positionierung zueinander bzw. die daraus resultierende, aufwendige und kostenintensiven Fertigung.

Üblicherweise werden Dekorfolien nach dem Vakuumverfahren oder dem Pressluftverfahren zu dreidimensionalen Tiefziehgebilden umgeformt. Dabei werden die grafisch gestalteten thermoplastischen Folien auf eine oberhalb der Materialerweichungstemperatur gelegene Temperatur erwärmt und ermöglichen dabei die Verformung bei relativ geringem Druck bzw. Vakuum. Diese Vakuum- und Pressluftverfahren können sehr effizient bei grafisch unkritisch bzw. neutral gestalteten Folien und Formkörpern eingesetzt werden und funktionieren beim Vakuumverfahren bereits bei einem Druckmitteldruck kleiner 0,95 bar und beim Pressluftverfahren bei einem Arbeitsmitteldruck kleiner 6 bar.

Bei Formteilen, bei denen eine exakte Position von grafisch gestalteten Elementen, also eine große Abbildungsgenauigkeit bezüglich einer Vorlage und/oder eine hohe Konturenschärfe und bei denen nach dem Tiefziehvorgang eine exakte Form benötigt wird, bietet das Verfahren der isostatischen Hochdruckverformung nach der DE 38 40 542 C1, als auch in einer etwas eingeschränkteren Art das sogenannte Hydroforming, Vorteile.

Bei der Herstellung derartiger Elektrolumineszenzfelder in Verbindung mit der grafischen Gestaltung muss auf hohe Positionsgenauigkeit der einzelnen Drucke und Prozesse untereinander geachtet werden. Insbesondere stellt die Positionierung der nahezu transparenten ITO-Pastengrafik ein wesentliches Qualitätskriterium dar. Aus der US 5,583,394 ist ein Verfahren zur Registrierung bekannt, das im sichtbaren Licht unsichtbare Positioniermarken vorsieht, die mittels entsprechender Lichtquelle, beispielsweise mittels Ultraviolettlicht, für entsprechende Lesesensoren erkennbar gemacht werden und damit eine exakte Positionierung ermöglichen.
Nachteilig wirkt sich dabei aus, dass diese Registriermarke nur mittels eines zusätzlichen Arbeitsschrittes aufgebracht werden kann und nur mittels spezieller Lichtquellen und spezieller Sensoren zur Positionierung verwendet werden können.

Elektrolumineszenz-Siebdruckpasten werden im allgemeinen auf Basis anorganischer Substanzen aufgebaut und hier sind wiederum hochreine ZnS, CdS, ZnₓCd₁₋ₓS, etc. Verbindungen der II und VI Gruppe des Periodensystems von Bedeutung, die üblicherweise mit Cu, Mn, Ag, usw. dotiert bzw. aktiviert werden. Übliche Farben sind gelb, grün, grün-blau, blau-grün und weiß.
Entsprechend dem Stand der Technik werden derartige Lumineszenz-Pigmente mikroverkapselt und mit Durchmessern von typisch 15 bis 60 µm den diversen Siebdruckfarben beigemengt, als auch unverkapselt, allerdings unter Berücksichtigung der speziellen hygroskopischen Eigenschaften der ZnS-Pigmente. Dabei werden Bindemittel verwendet, die einerseits eine gute Adhesion zu sogenannten ITO-Schichten haben, weiters gut isolierend wirken, das Dielektrikum verstärken und damit eine Verbesserung der Durchschlagsfestigkeit bei hohen elektrischen Feldstärken bewirken und zusätzlich im ausgehärteten Zustand eine gute Wasserdampfsperre aufweisen und die Phosphorpigmente zusätzlich schützen und lebensdauerverlängernd wirken.

Üblicherweise werden derartige Phosphorpasten mittels Siebdruck oder anderer Beschichtungsverfahren, wie beispielsweise Streichen, Rollenbeschichten, etc. auf transparente Kunststoff-Folien oder Gläser aufgebracht, die wiederum eine weitgehend transparente elektrisch leitende Beschichtung aufweisen und dadurch die Elektrode für die Sichtseite darstellen. Anschließend werden drucktechnisch und/oder laminationstechnisch das Dielektrikum und die Rückseitenelektrode hergestellt.

Übliche ITO-Pasten-Beschichtungen (oder auch Zinn-Oxid, etc. Beschichtungen) mittels Siebdruck weisen zwar den Vorteil der weitgehend beliebigen geometrischen Gestaltungsmöglichkeit auf, haben jedoch gegenüber aufgedampfter bzw. aufgesputterter transparenter und elektrisch leitender Schichten den Nachteil der geringeren optischen Durchlässigkeit und weiters der wesentlich geringeren Flächenleitfähigkeit von meist einigen 100 Ohm pro Quadrat im Vergleich zu einigen wenigen 10 Ohm pro Quadrat bei ITO-Polyster Folien bzw. einigen wenigen Ohm pro Quadrat bei ITO beschichteten Gläsern, wobei bei Gläsern zusätzlich Pasten eingesetzt werden können, beispielsweise In₂O₃/SnO₂, die allerdings bei über 500°C gebrannt werden müssen und dadurch bereits bei 0,25 µm Filmstärke eine optische Transparenz von größer 95% und eine Leitfähigkeit bei einer Einfachbeschichtung von 500 bis 1000 Ohm pro Quadrat liefern können.

Der vorliegenden Erfindung liegt die Aufgabe zugrunde, ein dreidimensionales grafisch gestaltetes Kunststoff-Formteil mit integrierten Elektrolumineszenzelementen kostengünstig, mit langer Lebensdauer, hoher Leuchtkraft und Funktion bei der jeweils zur Verfügung stehenden Stromversorgung herzustellen.

Die Lösung der gestellten Aufgabe erfolgt durch die Merkmale des Anspruchs 1.

Vorteil der Erfindung ist, dass sogar in einem einzigen Verfahrensschritt im Siebdruckverfahren sowohl der Grafikdruck als auch die EL-Schicht auf der Rückseite der Folie aufgedruckt werden können.
Dies ist eine große Arbeitsvereinfachung und führt dank der Einbettung der EL-Schicht in die Druckschicht zu einer verzerrungsfreien Verformung beider Schichten, weil diese in einer einzigen Ebene oder dicht übereinander liegen können.

Im Rahmen der vorliegenden Erfindung ist festgestellt worden, dass neuartige Elektrolumineszenz-Siebdruckfarben und neuartige ITO (Indium-Tin-Oxide)-Farben und neuartige Isolations- bzw. Dielektrikumsfarben zusammen mit den weitgehend bekannten Silber-Leitpasten gemeinsam mit dem Druckbild aufgebracht werden können und anschließende Hochdruckverformungen und das Hinterspritzen mittels thermoplastischer Kunststoffe bei Beachtung einiger Grundregeln ohne Funktionsbeeinträchtigung der Elektrolumineszenzelemente durchgeführt werden können.

Erfindungsgemäß gelangt zur Verformung der Kunststoffteile das bereits angesprochene Verfahren der isostatischen Hochdruckverformung zum Einsatz. Dabei werden sogenannte kaltreckbare Kunststoffolien mit Druckfarben versehen, die zusammen bei einer Arbeitstemperatur unterhalb der Erweichungstemperatur des thermoplastischen Folienkunststoffes, durch eine stoßartige Umformung zu einem dreidimensionalen Kunststoff-Formteil mit hoher Abbildungsgenauigkeit führt.

Vorteilhaft können mit der isostatischen Hochdruckverformung, insbesondere durch die stoßartige Beaufschlagung des Kunststoffteiles mit bevorzugt einigen 100 bar Druckluft, typisch 50 bis 300 bar, sehr kurze Zykluszeiten bei hervorragend kontrollierter und gleichmäßiger Verformung und damit hoher Abbildungstreue erreicht werden und weiters bieten derartig hergestellte Formteile durch die geringe Erwärmung und damit den Wegfall einer zeitaufwendigen Abkühlphase hervorragend formstabile Gebilde bzw. gleichbleibende Konturen, was für einen anschließenden Stanzvorgang und das Einlegen in ein Spritzgußwerkzeug sehr wesentlich ist und qualitätserhöhend wirkt.

Andere Verfahren zur dreidimensionalen Verformung der Kunststoffolie sind auch denkbar, z.B. durch mechanische Verformung oder einen mechanischen Prägevorgang. Eine Nachverformung der in ein Spritzgußwerkzeug eingelegten Kunststoffolie kann auch durch Einspritzen der thermoplastischen Kunststoffmasse selbst erfolgen.

Der vorliegenden Erfindung liegt ferner die Erkenntnis zugrunde, daß für ein derartiges Produkt bekannte Siebdruckpasten mit Phosphorpigmenten, insbesondere in mikroverkapselter Ausführung, jedoch auch in nicht verkapselter Ausführung, auf Basis entsprechend dotierter Verbindungen der II und VI Gruppe des Periodensystems, insbesondere in Form der mit Cu, Mn, Ag, etc. dotierten ZnS Pigmente in Verbindung mit speziellen kaltverformbaren Polycarbonatsubstraten bzw. den diversen Mischungen aus Polycarbonat und Polyäthylenterephtalat (PETP) bzw. Polyalkylenterephtalaten hervorragend geeignet sind. Dabei wirken sich Beimengungen von weiteren Leuchtfarben, insbesondere solcher, die durch die Elektrolumineszenz-Strahlung zur Lichtanregung und Abgabe entsprechender Strahlung mit in weiten Bereichen wählbaren Spektren bzw. schmalbandiger Wellenlängen-Spitzen, sehr positiv und effektvoll aus.

In einer Weiterbildung dieses Verfahrens kann der Farbaufdruck sandwichartig zwischen zwei Lagen Folienmaterial eingebettet sein und bietet dabei weniger Probleme beim Hinterspritzen mit thermoplastischen Kunststoffen, da in diesem Fall der Farbaufdruck durch die zusätzliche Folie gegen Verzerrungen und Aufschmelzungen im Bereich der Anspritzung besser geschützt wird.

In einer weiteren typischen Ausführungsform werden nicht nur eine Leuchtfeldanordnung mit zwei elektrischen Anschlüssen ausgeführt, sondern mehrere Felder, beispielsweise mit verschiedenen Farben leuchtende Felder bzw. Schriften und/oder Symbole.

In Bezug auf die notwendige Positionsgenauigkeit der einzelnen Drucke ist im Rahmen der vorliegenden Erfindung festgestellt worden, daß die Registrierung der verschiedenen Schichten und Prozesse im allgemeinen mittels optischer Registriermarken im sichtbaren Lichtbereich manuell als auch automatisch realisiert werden können und daß jene Schicht auf Basis der nahezu transparenten ITO-Paste mittels elektrischer Testkonfigurationen in Verbindung mit der Leitpastenstruktur sehr gut auf die Positionsgenauigkeit als auch auf hohe Prozeßkonstanz kontrolliert bzw. registriert werden kann. Zusätzlich können damit der zulässige Flächenwiderstand und/oder Übergangswiderstand der ITO-Pastenkontakte zu den Leitpasten überprüft und protokolliert werden.

Im folgenden wird die Erfindung anhand von einigen wenigen Ausführungsformen näher dargestellt und sollen dabei die erfindungswesentlichen Merkmale hervorgehoben werden.
Es zeigen:
Figur 1: einen Schnitt durch einen typischen dreidimensionalen Kunststoff-Formkörper mit EL-Leuchtfeldern;
Figur 2: Einen vergrößerten Ausschnitt aus Figur 1;
Figur 3: einen Schnitt durch einen weiteren typischen dreidimensionalen Kunststoff-Formkörper mit EL-Leuchtfeldern;
Figur 4: Einen vergrößerten Ausschnitt aus Figur 3;
Figur 5: einen Schnitt durch eine andere Ausführungsform eines dreidimensionalen Kunststoff-Formkörpers mit EL-Leuchtfeldern;
Figur 6: einen Schnitt durch eine weitere Ausführung eines dreidimensionalen Kunststoff-Formkörpers mit EL-Leuchtfeldern;
Figur 7: einen Schnitt durch eine weitere Ausführung eines dreidimensionalen Kunststoff-Formkörpers mit EL-Leuchtfeldern;
Figur 8: einen Schnitt durch eine abgewandelte Ausführung des dreidimensionalen Kunststoff-Formkörpers mit EL-Leuchtfeldern;
Figur 9: einen Schnitt durch einen 3-D Kunststoff-Formkörper mit EL-Leuchtfeldern, wobei in diesem Fall die Anspritzung von Außen erfolgt, d.h. der 3-D Dekorfolienteil auf den Spritzgußformen-Kern gebracht wird;
Figur 10: eine Draufsicht auf eine Testgeometrie zur Überprüfung der Positionsgenauigkeit der diversen Druckgeometrien und insbesondere der elektrisch leitenden und nahezu durchsichtigen und daher schwer erkennbaren ITO-Siebdruckgeometrie;
Figur 11: Einen Schnitt durch die Anordnung gemäß Figur 10;
Figuren 12: eine Draufsicht auf dreidimensional gestaltete Kunststoff-Formkörper mit grafisch gestalteter Oberfläche und Elektrolumineszenz-Leuchtfeldern.

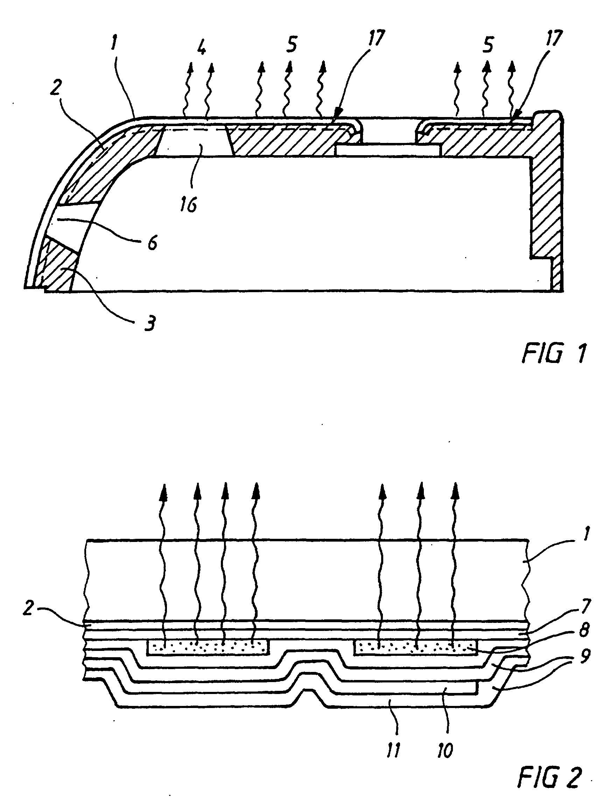

Gemäß Figur 1 wird eine typisch 100 bis 300 µm dicke und transparente Folie 1, bevorzugt aus Polycarbonat bzw. einer Polycarbonat-Polyestermischung mit Spezifikations-gegebener Oberflächenausführung, wie beispielsweise hochglänzend oder seidenmatt, auf der Innenseite mit einem Grafikdruck 2 versehen, wobei dafür bevorzugt das Siebdruckverfahren und entsprechende Siebdruckfarben zum Einsatz gelangen. Jedoch kann auch eine Kombination mit anderen Druckverfahren, beispielsweise mit Offsetdrucken zur grafischen Gestaltung verwendet werden. Insbesondere sind auch digitale Druckverfahren, wie beispielsweise das InkJetverfahren, grundsätzlich geeignet. In diesen Grafikdruck 2 werden Leuchtfelder 17 eingebettet, die ebenso z.B. im Siebdruckverfahren auf die Innenseite der Folie 1 aufgebracht werden. Im nächsten Schritt wird die bedruckte Dekorfolie 1 einer stoßartigen isostatischen Hochdruckverformung unterzogen und so in ihre vorgesehene dreidimensionale Form gebracht. Anschließend wird die verformte Folie 1 mit thermoplastischem Kunststoff 3 hinterspritzt. Die Kontaktierung der Elektrolumineszenzfelder 17 erfolgt an freigelassenen Kontaktflächen 6.

Figur 2 zeigt einen vergrößerten Ausschnitt des Dekorfolien-Spritzgußkörpers gemäß Figur 1. Im vorliegenden Fall wird als erste Druckstufe die grafische Gestaltung 2 mit deckenden und durchsichtigen bzw. transluzenten Farben realisiert, d.h. auf das Folienmaterial 1 aufgebracht. Anschließend wird eine weitgehend transparente Deckelektrode 7 z.B. in Form einer ITO-Siebdruckpaste und der gewünschten Struktur aufgebracht. Auf diese ITO-Schicht 7 werden die Elektrolumineszenz-Pasten 8 in vorgegebenen Strukturen gedruckt, wobei nicht nur eine Elektrolumineszenz-Paste 8 mit einer Elektrolumineszenz-Farbe, sondern auch mehrere unterschiedlich strahlenden EL-Farben verwendet werden können. Insbesondere können den EL-Farben auch Tagesleuchtfarben beigemengt, so daß dadurch gewünschte Farbeffekte beim aktivieren der EL-Felder 17 erreicht werden. Weiters können diese EL-Elemente 17 mit unterschiedlichen Stromkreisen, insbesondere durch getrennte Gestaltung der Silberleitpasten-Elektroden 7, ausgeführt sein.
Anschließend an die EL-Pasten-Drucke 7 werden Isolationsdruckfarben 9 meist in zwei Druckvorgängen mit unterschiedlichen Sieben zur Vermeidung von Fehlstellen aufgebracht und damit das sogenannte Dieelektrikum hergestellt.
Üblicherweise werden diese Isolationspasten 9 weiß eingefärbt und können dadurch eine Reflektionswirkung für die EL-Strahlung bewirken.
Im Anschluß an diese Isolationsschichten 9 wird eine Silberleitpastenstruktur 10 aufgedruckt und damit die Basiselektrode hergestellt.
Üblicherweise werden dadurch gleichzeitig die ITO-Pastendrucke 7 umlaufend verstärkt, was allgemein als Bus-bar Technik beschrieben wird, so daß damit eine gleichmäßige elektrische Feldstärke über das gesamte EL-Leuchtfeld 17 erreicht wird. Weiters werden mittels dieses Druckes der Silberpasten 10 auch die Anschlußflächen der ITO-Elektroden 7 verstärkt, wobei diese Verstärkung im Sinne der Reduktion des elektrischen Flächenwiderstandes zu verstehen ist.

Oftmals ist es nun vorteilhaft, diese unterschiedlichen Siebdruckschichten 7-10 noch zusätzlich durch eine Polyurethandispersionschicht 11 abzudecken, um im folgenden eine optimale Anbindung an die unterschiedlichen thermoplastischen Spritzgußmassen zu erhalten.
Diese kaltreckbaren und grafisch gestalteten EL-Dekorfolien 1 werden nun meist im Mehrfachnutzen einer stoßartigen isostatischen Hochdruckverformung unterzogen und zu diesem Zwecke auf typisch 40 bis 80 °C vorgewärmt. Diese Erwärmung erfolgt jedoch gesichert unterhalb der Erweichungstemperatur des thermoplastischen Kunststoffes der Dekorfolie 1, da ansonsten keine hohe Abbildungstreue des tiefgezogenen Druckbildes gegeben wäre.
Im Anschluß an den Tiefziehvorgang erfolgt eine exakte Konturstanzung dieses dreidimensionalen Gebildes und es wird nun in eine Spritzgußform eingelegt und im vorliegenden Fall mittels geeigneter thermoplastischer Kunststoffe 3 der eingangs genannten Materialien hinterspritzt. Dabei muß bei der Wahl des Anspritzpunktes sehr sorgfältig auf die Form und die grafische Gestaltung Rücksicht genommen werden, um Verzerrungen und Umschmelzungen zu vermeiden.
Im allgemeinen werden bereits im Spritzgußwerkzeug die Anschlußstellen für die EL-Leuchtfelder 17 freigehalten, so daß die Kontaktierung der EL-Elektrodenanschlüsse 6 mittels Federkontakt, Crimpen oder mittels elektrischer Leitkleber erfolgen kann.
Oftmals werden die Silberleitpastenanschlußflächen noch zusätzlich durch passivierende, elektrisch leitende Schichten im Zuge des Siebdruckprozesses überzogen und damit ein hoher Oxidationsschutz und eine lange Lebensdauer dieser Anschlüsse erreicht.
In einer Weiterführung dieser Ausführungsform können auch elektrische Anschlußelemente in die dreidimensional geformte Dekorfolie gecrimpt oder geklemmt werden und diese Einheit gemeinsam oder auch hintereinander in das Spritzgußwerkzeug eingelegt und hinterspritzt werden und können damit extrem mechanisch als auch elektrisch belastbare Anschlußelemente für die EL-Leuchtfelder 17 erreicht werden.

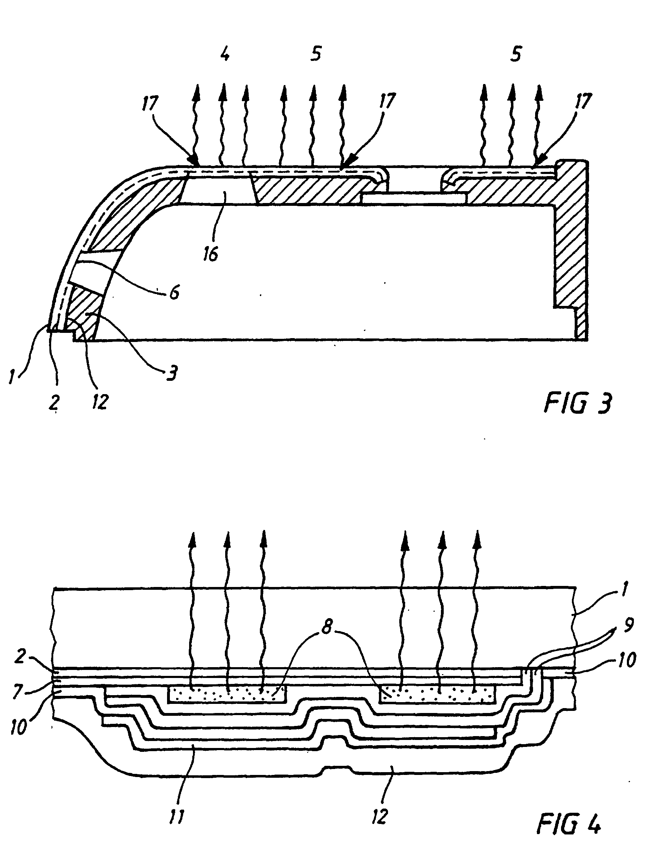

Figur 3 zeigt, daß zusätzlich zu der vorhergehenden Ausführungsform eine thermoplastische Kunststofffolie 12 auf die Unterseite der grafisch gestalteten EL-Dekorfolie 1 laminiert werden kann. Der Haftverbund kann je nach geforderter Spezifikation durch die siebdrucktechnische Aufdruckung einer Polyurethan-Dispersionschicht, einer thermoplastischen Hotmelt-Siebdruckbeschichtung als auch dadurch erreicht werden, daß die zusätzliche thermoplastische Folie 12 durch einen Hochschmelzvorgang zu einem Verbund mit der grafisch gestalteten EL-Dekorfolie 1 gebracht werden kann oder aber diese thermoplastische Folie 12 eine entsprechende zusätzliche Beschichtung, beispielsweise eine entsprechende Hotmeltbeschichtung aufweist und damit durch einen Laminationsvorgang zu einer Sandwich-artigen Verbundfolie geführt werden kann.
Der Vorteil dieser zusätzlichen Folie auf der Innenseite und damit auf der Anspritzseite im Spritzgußwerkzeug liegt in dem erhöhten Schutz der grafischen und farblichen Gestaltung der Dekorfolie 1 und ermöglicht insbesondere die Realisierung kritischer Geometrien, bei denen oftmals die Anspritzposition ungünstig gewählt werden muß und dabei die hohe Anspritztemperatur Verzerrungen und Farbverfälschungen im Anspritzbereich verursachen würde, die durch diese zusätzliche Folie weitgehend abgefangen werden kann.

Figur 4 zeigt einen vergrößerten Schnitt durch die Ausführung gemäß Figur 3. Die Abfolge der aufgetragenen Schichten entspricht im wesentlichen der von Figur 2. Jedoch wird über die beschriebene Schichtfolge 7-11 die zusätzlche thermoplatische Kunststoffoienschicht 12 aufgebracht.

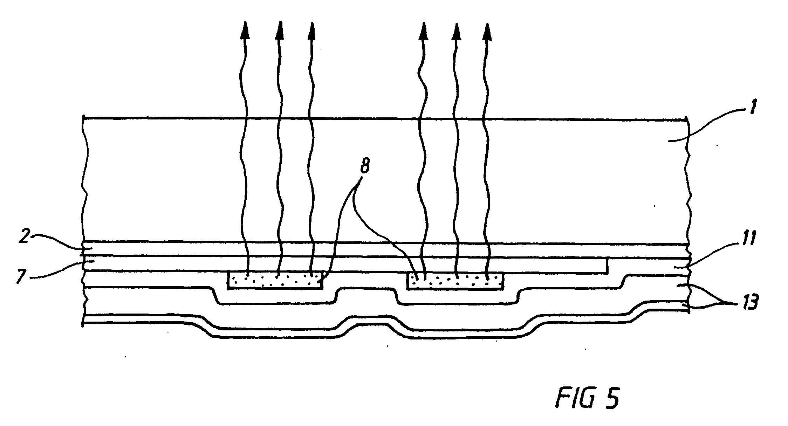

Gemäß Figur 5 wird anstelle der Isolationsschicht 9 und der Gegenelektrodenschicht 10 mittels Siebdruck eine metallisierte Kunststoffolie 13 auflaminiert.
Der Haftverbund kann je nach geforderter Spezifikation durch die siebdrucktechnische Aufdruckung einer Polyurethan-Dispersionschicht 11, einer thermoplastischen Hotmelt-Siebdruckbeschichtung als auch dadurch erreicht werden, daß die zusätzliche metallisierte Folie 13 durch einen Hochschmelzvorgang zu einem Verbund mit der grafisch gestalteten EL-Dekorfolie 1 gebracht werden kann oder aber diese metallisierte Folie 13 eine entsprechende zusätzliche Beschichtung, beispielsweise eine entsprechende Hotmeltbeschichtung aufweist und damit durch einen Laminationsvorgang zu einer Sandwich-artigen Verbundfolie geführt werden kann.
Der Vorteil dieser Ausführungsform liegt in der geringeren Anzahl von Drucken, in der hohen Qualität der Isolationsschicht und der damit verbundenen guten Verformbarkeit.
Der wesentliche Nachteil dieser Ausführungsform liegt in der eingeschränkten Ansteuermöglichkeit der EL-Leuchtfelder 17. Im allgemeinen wird in diesem Fall lediglich ein gemeinsam ansteuerbares EL-Leuchtelement 17 gestaltbar sein und weiters stellt diese Art der Ausführungsform keine sparsame Lösung hinsichtlich Energieversorgung dar, da ja weitgehend die gesamte Fläche als Plattenkondensator wirkt und nicht nur einzelne selektive Flächen.
Diese Nachteile können in einer weiteren Ausführungsform insofern genützt werden, als übliche Dielektrikumsschichten 9 bei zweimaligem Siebdruckvorgang kaum mehr als 20 bis 30 µm Dicke aufweisen und metallisierte Kunststoffolien in dieser Dicke auflaminiert werden müssen, um bei gleichartiger Stromversorgung einige 10⁶ Volt/cm an elektrischer Feldstärke zwecks EL-Anregung zu erreichen. In dieser speziellen Ausführungsform werden nun typisch 50 µm dicke und rückseitig metallisierte Kunststoffolien 13 verwendet und die dreidimensionale Gestaltung derart gewählt, daß nur in den Bereichen gewünschter EL-Anregung eine Reckung der Materialien um z.B. 100% erfolgt und dadurch diese als Dieelektrikum wirkende Schicht auf die Hälfte reduziert wird und damit bei einer üblichen EL-Versorgungsspannung zum Aufbau eines ausreichend hohen elektrischen Feldes führt und dadurch in diesen selktiven Bereichen eine EL-Anregung erfolgen kann.

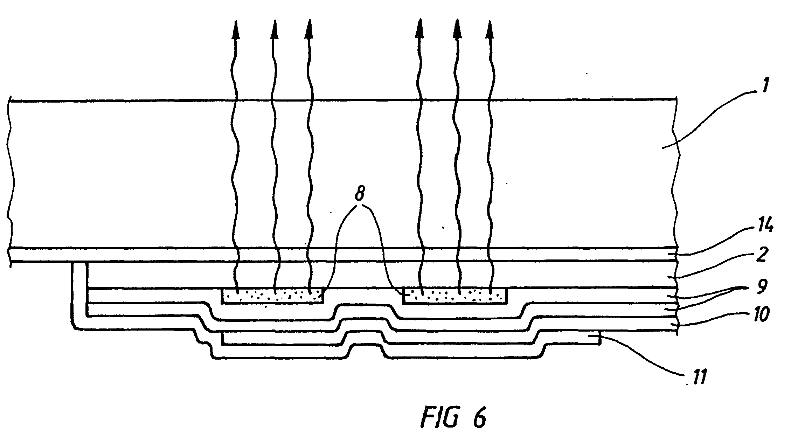

Figur 6 zeigt anstelle der ITO-Pastenbeschichtung 7 der Dekorfolie 1 mittels Siebdruck eine transparente Dekorfolie mit ITO-Sputter-Beschichtung 14 und/oder spiegelnder semitransparenter Schichten.
Diese Ausführungsform hat den wesentlichen Vorteil, daß derart ITO-beschichtete, transparente Folien 14 eine sehr hohe optische Transparenz, typisch im Bereich größer 85% bis zu 95% aufweisen und zusätzlich sehr geringe Flächenwiderstandswerte bieten, typisch im Bereich 100 bis 1000 Ohm pro Quadrat.
Dadurch können EL-Leuchtelemente 17 mit hoher optischer Leuchtkraft und auch entsprechend geringer Abmessungen erreicht werden.
Nachteilig wirkt sich dabei jedoch neben dem hohen Preis für derart beschichtete Kunststoffolien 14 die Vollflächigkeit der elektrisch leitenden Beschichtung aus und die geringe Verformbarkeit.
Die Probleme hinsichtlich der eingeschränkten Verformbarkeit ohne elektrische Unterbrechung kann insofern behoben werden, als übliche EL-Felder 17 ohnedies meist kaum dreidimensionale starke Verformungen aufweisen und in den Bereichen starker Verformung zur Unterstützung der elektrischen Leitfähigkeit sogenannte Bus-bars, das sind im allgemeinen Silberpasten-Strukturen, verwendet werden. Diese elektrisch leitenden Polymerpasten sind wiederum relativ gut plastisch verformbar und können damit einen gesicherten Kontakt zu diesen transparenten Deckelektroden herstellen und werden überdies keine zusätzlichen Drucke benötigt, da durch entsprechende Gestaltung der Isolationsstrukturen diese ITO-Struktur verstärkenden Leitpastenstrukturen gleichzeitig mit dem Basiselektrodendruck erfolgen kann.

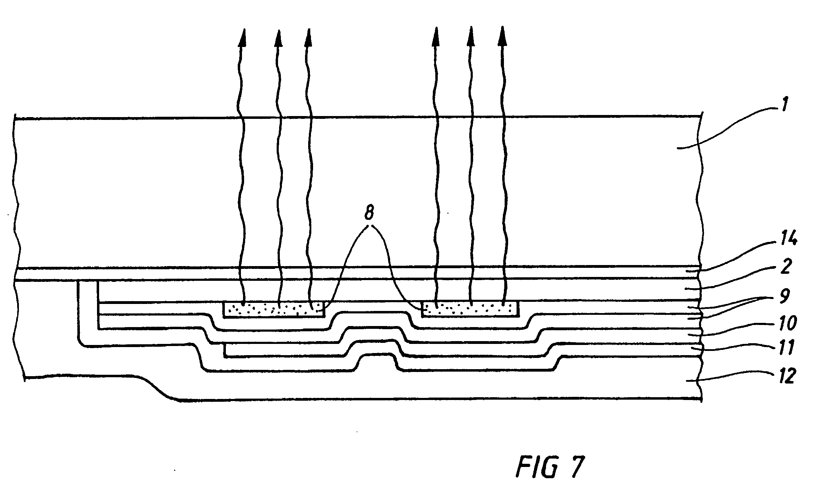

Gemäß Figur 7 wird anstelle der ITO-Pastenbeschichtung 7 der Dekorfolie 1 mittels Siebdruck eine transparente Dekorfolie 1 mit ITO-Sputter-Beschichtung 14 und/oder spiegelnder semitransparenter Schichten verwendet und zusätzlich zu der vorhergehenden Ausführungsformen eine thermoplastische Kunststoffolie 12 auf die Unterseite der grafisch gestalteten EL-Dekorfolie laminiert

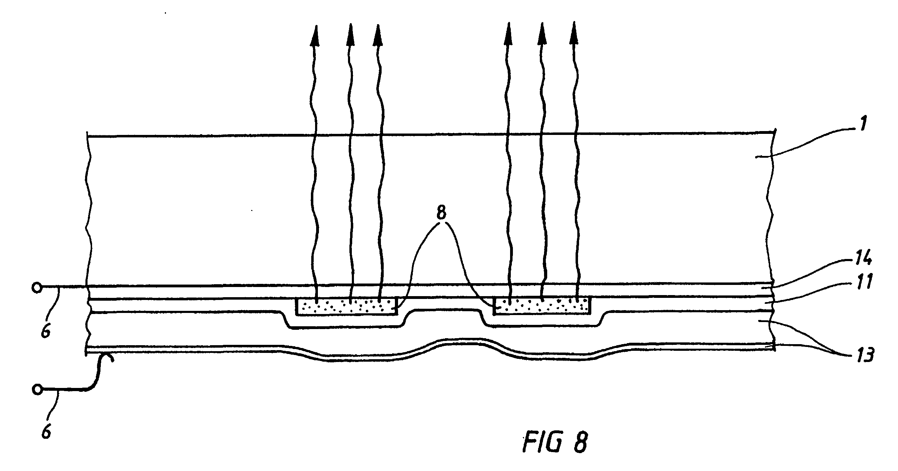

In Figur 8 wird anstelle der ITO-Pastenbeschichtung 7 der Dekorfolie 1 mittels Siebdruck eine transparente Dekorfolie 1 mit ITO-Sputter-Beschichtung 14 und/oder spiegelnder semitransparenter Schichten verwendet und anstelle der zweifachen Isolationsdrucke 9 und des Silberpastendruckes 10 eine metallisierte thermoplastische Kunststoffolie 13 auf die Unterseite der grafisch gestalteten EL-Dekorfolie 1 laminiert.

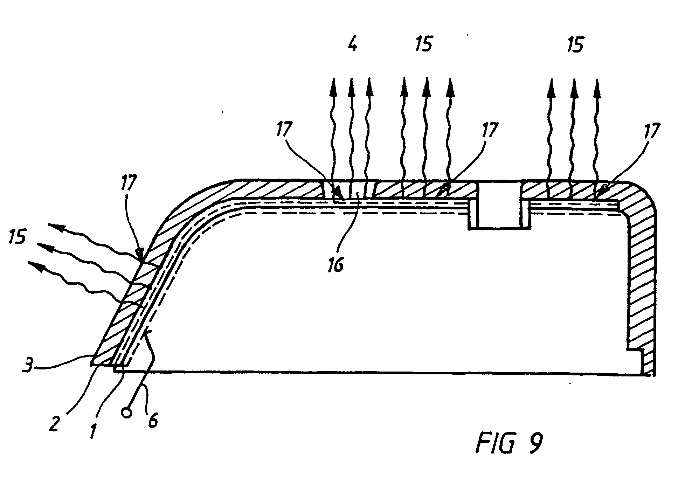

In Figur 9 ist dargestellt, daß die Anspritzung der Dekorfolie 1 mit thermoplatischem Kunststoff 3 auch von Außen erfolgen kann, d.h. der 3-D Dekorfolienteil 1 wird auf den Spritzgußformen-Kern gebracht. Dabei muß der aufgespritzte thermoplastische Kunststoff 3 im Bereich der EL-Leuchtfelder 17 entsprechende Ausnehmungen 16 aufweisen, um einen Lichtaustritt zuzulassen, oder aber zumindest im Bereich der EL-Leuchtflächen 17 transparent bzw. transluzent gestaltet sein.

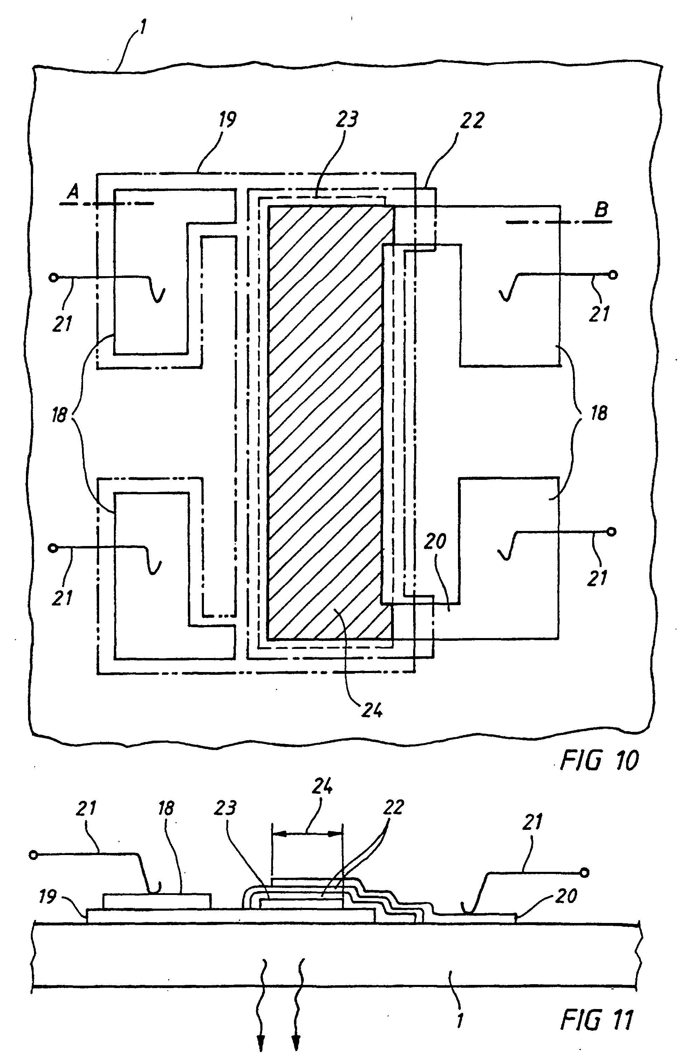

Figur 10 ist eine Draufsicht auf eine Testgeometrie zur Überprüfung der Positionsgenauigkeit der diversen Druckgeometrien und insbesondere der elektrisch leitenden und nahezu durchsichtigen und daher schwer erkennbaren ITO-Siebdruckgeometrie.
Auf ein Trägersubstrat, z.B. eine Folie 1, wird gemäß der oben beschriebenen Verfahrensweise ein Elektrolumineszenzelement aufgedruckt. Anhand einer typischen Ausführungsform sind vier Anschlußflächen 18, z.B. aus Silberleitpaste, vorgesehen, wobei je zwei Flächen für die ITO-Struktur 19 und je zwei Flächen für die Silber- bzw. Leitpastenstruktur 20 vorgesehen ist.
Die Anschlußflächen 18 der ITO-Pastenstruktur 19 werden wie üblich mittels Silberpasten verstärkt, so daß auch ein punktförmiger Kontaktfinger 21 einen gesicherten elektrischen Kontakt erzielen kann, der zusätzlich relativ unkritisch von Seiten der Positionierung ist.
Durch die spezielle Wahl der Geometrie kann nahezu jede vorgegebene Toleranz der diversen Druckstrukturen sehr einfach durch diesen elektrischen Testadapter überprüft und protokolliert werden. Dabei müssen lediglich die diversen Strukturen entsprechend der zu überprüfenden Toleranzen gestaltet werden, beispielsweise mit jeweils 0,1 oder auch 0,2 mm Überstand gedruckt werden.
Sollten nun Fehlpositionierungen in den einzelnen Druckvorgängen stattgefunden haben, so werden bei Anlegen von entsprechenden Testspannungen unterschiedliche Widerstandswerte ermittelt werden und können diese den jeweiligen Fehlern sehr einfach zugeordnet werden.
Weiters werden mit diesen elektrischen Testgeometrien auch die Isolationsdrucke 22 und die EL-Drucke 23 auf Postionsgenauigkeit überprüft und zusätzlich können durch Anlegen entsprechender Testspannungen auch Isolationsprüfungen und Flächenwiderstandsprüfungen vorgenommen werden. Zusätzlich kann anhand dieser Testgeometrien bei Anlegen geeignet gewählter EL-Spannungen auch optisch das Leuchtfeld 24 überprüft werden. Weiters kann dieses EL-Leuchtfeld 24 noch mit vollautomatischen Farbmeß-Sensoren bzw. Intesitätsmeß-Sensoren auf geforderte Spezifikationswerte überprüft werden.

Figur 11 zeigt die Anordnung gemäß Figur 10 nochmals im Schnitt.

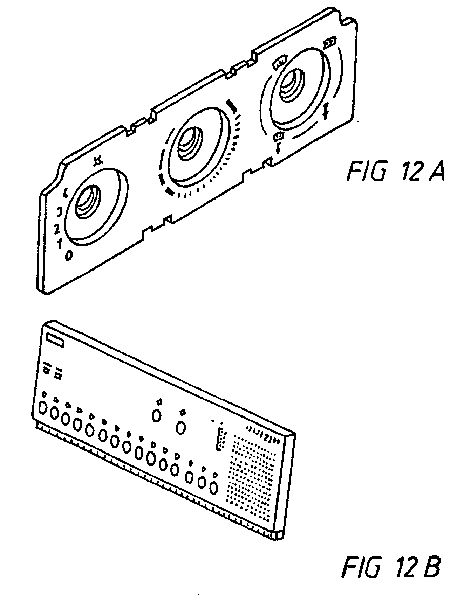

Die Figuren 12 zeigen Beispiele von dreidimensionalen Flächengebilden mit eingearbeiteten Elektrolumineszenzelementen, welche El-Elemente zur Skalenbeleuchtung, Funktionsanzeige o.ä. eingesetzt werden.

### Zeichnungslegende

- 1: Kunststoffolie (Dekorfolie)
- 2: Druckschicht (zur grafischen Gestaltung (und EL - Aufbau)
- 3: Hinterspritzung (Thermoplastischer Kunststoff)
- 4: EL-Lichtemissionsbereich (ohne hinterspritzten Kunststoff)
- 5: EL-Lichtemissionsbereich (mit hinterspritztem Kunststoff)
- 6: Kontaktierung der diversen EL-Elektroden
- 7: ITO-Pastendruck
- 8: EL-Pastendruck (inkl. diverser Tagesleuchtfarben-Beimengungen)
- 9: Isolationsdruck (=Dieelektrikum)
- 10: Silberpastendruck
- 11: Polyurethan-Dispersions-Beschichtung
- 12: Thermoplastische Kunststoffolie
- 13: Metallisierte thermoplastische Kunststoffolie
- 14: ITO-Sputterschicht
- 15: EL-Lichtemissionsbereich (mit frontseitig angespritztem Kunststoff)
- 16: Ausnehmung
- 17: Leuchtfelder
- 18: Anschlußfläche
- 19: ITO-Struktur
- 20: Leitpastenstruktur
- 21: Kontaktfinger
- 22: Isolationsdruck
- 23: Elektrolumineszenzdruck
- 24: Leuchtfeld

## Patentansprüche

1. Kunststoff-Formkörper mit einem oder mehreren integrierten, optoelektronisch aktiven Leuchtfeldern (17) mit einer mindestens im Bereich der Leuchtfelder (17) angeordneten transluzenten und kaltreckbaren, dreidimensional verformten Kunststoff-Folie (1), auf deren Rückseite eine leitfähige Schicht als transparente Deckelektrode (7) aufgebracht ist, die rückseitig mindestens stellenweise mit einer Elektrolumineszenz-Schicht (8) beschichtet ist und von einer Isolationsschicht (9) abgedeckt ist, hinter der eine Rückelektrode (10) aus einer leitfähigen Schicht aufgedruckt ist, die ihrerseits von einer Isolierschicht (11) abgedeckt ist, wobei die Innenseite der Kunststoff-Folie (1) mit einem Grafikdruck (2) versehen ist, in den Grafikdruck (2) die Leuchtfelder (17) eingebettet sind, die Elektrolumineszenz-Schicht (8) aus einer Siebdruckpaste besteht, der dreidimensional verformte Formkörper mit thermoplastischem Kunststoff (3) hinterspritzt ist und alle Schichten (2; 7-11) bei einer Arbeitstemperatur unterhalb der Erweichungstemperatur der Kunststoff-Folie (1) verformbar, d.h. kaltreckbar sind.

2. Kunststoff-Formkörper nach Anspruch 1, **dadurch gekennzeichnet, dass** die Leuchtfelder (17) Elektrolumineszenz-Leuchtfelder sind, jeweils bestehend aus zwei zueinander elektrisch isolierten Elektroden, nämlich einer Basiselektrode (10; 13) und einer Deckelektrode (7; 14), zwischen welchen eine Elektrolumineszenzschicht (8) angeordnet ist.

3. Kunststoff-Formkörper nach Anspruch 1 oder 2, **dadurch gekennzeichnet, dass** auch die Elektroden (10, 13; 7, 14) in Form von Siebdruckpasten aufgebracht sind.

4. Kunststoff-Formkörper nach einem der Ansprüche 1 bis 3, **dadurch gekennzeichnet, dass** die Elektrolumineszenzschicht (8) aus organischen oder anorganischen Substanzen besteht, welche in Form von feinem Puder oder mikroverkapselten und damit weitgehend wasserdampfunempfindlichen Elementen mit Durchmessern von typisch 10 bis 60 µm entsprechend plastisch verformbaren und dielektrisch hochwertigen Siebdruckfarben beigemengt sind.

5. Kunststoff-Formkörper nach einem der Ansprüche 1 bis 3, **dadurch gekennzeichnet, dass** die Kunststoff-Folie (1) an der Innenseite oder Außenseite mit den thermoplastischen Kunststoffen (3) hinterspritzt ist.

6. Kunststoff-Formkörper nach einem der Ansprüche 1 bis 4, **dadurch gekennzeichnet, dass** die Kunststoff-Folie (1) nach der grafischen Gestaltung in Form eines Sandwiches an der Innenseite oder Außenseite mit einer zusätzlichen thermoplastischen Folie (12) versehen wird.

7. Kunststoff-Formkörper nach einem der Ansprüche 1 bis 6, **dadurch gekennzeichnet, dass** die weitgehend transparente und elektrisch leitende Deckelektrode (7) aus Indium-Tin-Oxide (ITO) - Paste besteht.

8. Kunststoff-Formkörper nach einem der Ansprüche 1 bis 7, **dadurch gekennzeichnet, dass** die Kunststoff-Folie (1) eine Deckelektrode in Form einer ITO-Sputterschicht (14) oder spiegelnder semitransparenter Schichten aufweist, und diese weitgehend transparente Deckelektrode (14) in Bereichen starker Verformung oder in Bereichen außerhalb von Leuchtfeldern (17) mittels einer elektrisch leitenden Polymerpaste bedruckt ist.

9. Kunststoff-Formkörper nach einem der Ansprüche 1 bis 8, **dadurch gekennzeichnet, dass** anstelle der Isolationsschicht (9) und der Silberpasten-Basiselektrode (10) eine rückseitig metallisierte, transparente und sehr dünne Folie (13) auf die Elektrolumineszenzschicht (8) bzw. die Deckschicht (11) aufkaschiert ist.

10. Verfahren zur Herstellung eines Kunststoff-Formkörpers nach den Ansprüchen 1 bis 9, **gekennzeichnet durch** folgende Schritte:
a) Bereitstellen eines transparenten, kaltreckbaren dünnen Kunststoff-Folien-Substrates;
b) Aufbringen einer grafischen Gestaltung in Form von deckenden oder transluzenten Siebdruckgebilden;
c) Aufbringen einer weitgehend durchsichtigen, elektrisch leitenden Deckelektrodenschicht;
d) Aufbringen einer Elektrolumineszenzschicht;
e) Aufbringen einer isolierenden, dielektrischen Schicht,
f) Aufbringen einer elektrisch leitenden Basiselektrodenschicht;
g) Dreidimensionale Verformung unterhalb der Erweichungstemperatur des Kunststoffolien-Substrates von Einzel- oder Mehrfachnutzen;
h) Ausstanzung der Einzelnutzen.

11. Verfahren zur Herstellung eines Kunststoff-Formkörpers nach den Ansprüchen 1 bis 9, **gekennzeichnet durch** folgende Schritte:
a) Bereitstellen eines transparenten kaltreckbaren dünnen Kunststoffolien-Substrates, das auf der Innenseite mit einer ITO-Schicht oder wahlweise zusätzlicher, leitfähiger, spiegelnder, semitransparenter Schichten im Sputterverfahren ganzflächig beschichtet ist;
b) Aufbringen einer grafischen Gestaltung in Form von deckenden oder transluzenten Siebdruckgebilden;
c) Aufbringen einer Elektrolumineszenzschicht;
d) Aufbringen einer isolierenden, dielektrischen Schicht,
e) Aufbringen einer elektrisch leitenden Basiselektroden-Schicht mittels Siebdruck;
f) Dreidimensionale Verformung unterhalb der Erweichungstemperatur des Kunststoffolien-Substrates von Einzeloder Mehrfachnutzen;
g) Ausstanzung der Einzelnutzen.

12. Verfahren nach Anspruch 10 oder 11, **dadurch gekennzeichnet, dass** das verformte Kunststoff-Folien-Substrat in ein Spritzgusswerkzeug eingelegt und mit thermoplastischen Kunststoffen hinterspritzt wird, wobei die elektrischen Anschlussflächen für die Elektrolumineszenzelektroden und gegebenenfalls Sichtfenster ausgespart bleiben oder die elektrischen Anschlussflächen durch Einlegeteile und/oder Zusatzteile in Form von elektrisch leitenden Kontaktelementen und oder Folienkabeln nach außen geführt werden.

13. Verfahren nach einem der Ansprüche 10 bis 12, **dadurch gekennzeichnet, dass** die dreidimensionale Verformung des Kunststoffolien-Substrates durch isostatische Hochdruckverformung bei einem Druck des Druckfluids größer 20 bar und einer Erwärmung auf eine Arbeitstemperatur unterhalb der Erweichungstemperatur des Kunststoffes erfolgt.

14. Verfahren nach einem der Ansprüche 10 bis 12, **dadurch gekennzeichnet, dass** die dreidimensionale Verformung durch Einlegen des planen, unverformten Kunststoffolien-Substrates in ein Spritzgußwerkzeug erfolgt, wobei das Spritzgusswerkzeug auf eine Arbeitstemperatur unterhalb der Erweichungstemperatur des Kunststoffes erwärmt wird und die Verformung durch vorwiegend mechanische Verformung und anschließender Endverformung durch die thermoplastische Einspritzmasse oder vorwiegend durch die thermoplastische Einspritzmasse selbst erfolgt.

15. Verfahren nach einem der Ansprüche 10 bis 12, **dadurch gekennzeichnet, dass** das Kunststoff-Folien-Substrat durch einen mechanischen Prägevorgang dreidimensional vorgeformt wird, und derart vorgeformt in ein Spritzgusswerkzeug eingelegt wird.

16. Verfahren nach einem der Ansprüche 10 bis 15, **dadurch gekennzeichnet, dass** in einem Zwischenschritt auf die Basiselektrodenschicht eine Siebdruckschicht auf Basis wässriger Polyuhrethan-Dispersion und/oder lösemittelhaltiger Polyurethanfarben zwecks optimaler Anbindung an die thermoplastische Kunststoffmasse aufgebracht wird, wobei die elektrischen Anschlussflächen für die Elektrolumineszenzelektroden und gegebenenfalls Sichtfenster ausgespart bleiben.

17. Verfahren nach einem der Ansprüche 10 bis 16, **dadurch gekennzeichnet, dass** den Siebdruckpasten der Elektrolumineszenzschicht neben verschiedenen Elektrolumineszenz-Pigmenten auch Tagesleuchtfarbpigmente beigemengt sind.

18. Verfahren nach einem der Ansprüche 10 bis 17, **dadurch gekennzeichnet, dass** ineinander geschachtelte und getrennt ansteuerbare Leuchtfelder derart erzeugt werden, dass der Basiselektrodenanschluß eines innenliegenden Leuchtfeldes mittels Silberleitpaste mittels der sogenannten Cross-over Technologie nach Außen geführt wird, und dabei zusätzliche lokale Isolationsdruckschichten über die außenliegenden Elektrodenanschlüsse aufgebracht werden, damit diese innenliegenden Basiselektrodenanschlüsse elektrisch isolierend nach Außen geführt werden können, und die Basiselektrodenanschlüsse derart gestaltet elektrisch getrennt angesteuert werden können.

19. Verfahren nach einem der Ansprüche 10 bis 18, **dadurch gekennzeichnet, dass** auf die Basiselektrodenschicht eine dünne thermoplastische Folie laminiert wird und dadurch im Falle der Hinterspritzung mittels thermoplastischer Kunststoffe eine höhere Temperaturbelastung und damit insbesondere ungünstige Anspritzpositionen mit entsprechend hohen Temperaturen zugelassen werden können.

20. Verfahren nach einem der Ansprüche 10 bis 19 **dadurch gekennzeichnet, dass** die Anspritzung mittels thermoplastischer Kunststoffe nicht nur an der Innenseite, sondern auch an der Außenseite beziehungsweise auch von beiden Seiten derart erfolgt, so dass dabei optische Linseneffekte und Lichtleitungseffekte erzeugt werden, und dabei insbesondere thermoplastische Kunststoffe auf Basis Polycarbonat (PC) und Polymethylmethacrylat (PMMA) bzw. auch transparente Acrylnitril-Butadien-Styrol (ABS), Polyamid (PA) und Polypropylen (PP) Kunststoffe bzw. entsprechende Mischungen der genannten Kunststoffe, zum Einsatz gelangen.

21. Verfahren einen der Ansprüche 10 bis 20, **dadurch gekennzeichnet, dass** anstelle der Aufbringung einer isolierenden dielektrischen Schicht und der Basiselektroden-Schicht mittels Leitpaste lediglich die Geometrie zwecks Verstärkung der ITO-Elektrode und deren elektrischer Anschluss gedruckt wird, und anschließend mit bzw. auch ohne wässriger Polyurethan-Dispersionsbeschichtung eine auf der Rückseite metallisierte transparente dünne Folie auflaminiert wird, welche das Dielektrikum und die Basiselektrode inklusive Reflektor darstellt.

## Claims

1. Plastic moulding with one or more integrated optoelectronically active luminous fields (17) with a translucent and cold-stretchable three-dimensionally shaped plastic film (1) which is disposed at least in the region of the luminous fields (17) and on the back of which a conductive layer is applied as a transparent cover electrode (7) which is at least locally coated on the back with an electroluminescent layer (8) and is covered by an insulation layer (9) behind which a back electrode (10) consisting of a conductive layer covered in turn by an insulating layer (11) is printed, wherein the inside of the plastic film (1) is provided with a graphic impression (2), the luminous fields (17) are embedded into the graphic impression (2), the electroluminescent layer (8) consists of a screen printing paste, the three-dimensionally shaped moulding is back-injected with thermoplastic material (3) and all layers (2; 7-11) are deformable, i.e. cold-stretchable, at a working temperature below the softening temperature of the plastic film (1).

2. Plastic moulding according to Claim 1, **characterized in that** the luminous fields (17) are electroluminescent luminous fields each consisting of two electrodes electrically insulated from one another, namely a base electrode (10; 13) and a cover electrode (7; 14), between which an electroluminescent layer (8) is arranged.

3. Plastic moulding according to Claim 1 or Claim 2, **characterized in that** the electrodes (10, 13; 7, 14) are also applied in the form of screen printing pastes.

4. Plastic moulding according to any one of Claims 1 to 3, **characterized in that** the electroluminescent layer (8) consists of organic or inorganic substances which are blended, in the form of fine powder or microencapsulated and hence largely non water-vapour sensitive elements with diameters of typically 10 to 60 µm, with suitably plastically deformable and dielectrically high-grade screen printing inks.

5. Plastic moulding according to any one of Claims 1 to 3, **characterized in that** the plastic film (1) is back-injected with the thermoplastic materials (3) on the inside or outside.

6. Plastic moulding according to any one of Claims 1 to 4, **characterized in that** after the graphic design, the plastic film (1) is provided on the inside or outside with an additional thermoplastic film (12) forming a sandwich.

7. Plastic moulding according to any one of Claims 1 to 6, **characterized in that** the largely transparent and electrically conducting cover electrode (7) consists of indium-tin-oxide (ITO) paste.

8. Plastic moulding according to any one of Claims 1 to 7, **characterized in that** the plastic film (1) has a cover electrode in the form of an ITO sputter coating (14) or of reflective semi-transparent coatings, and this largely transparent cover electrode (14) is printed with an electrically conducting polymer paste in regions of high deformation or in regions outside luminous fields (17).

9. Plastic moulding according to any one of Claims 1 to 8, **characterized in that**, instead of the insulation layer (9) and the silver paste base electrode (10), a transparent and very thin film (13), metallized on the back, is laminated over the electroluminescent layer (8) and/or cover layer (11).

10. Process for the manufacture of a plastic moulding according to Claims 1 to 9, **characterized by** the following steps:
a) provision of a transparent, cold-stretchable, thin plastic film substrate;
b) application of a graphic design in the form of covering or translucent screen print patterns;
c) application of a largely transparent electrically conducting cover electrode layer;
d) application of an electroluminescent layer;
e) application of an insulating dielectric layer;
f) application of an electrically conducting base electrode layer;
g) three-dimensional shaping at below the softening temperature of the plastic film substrate, of single or multiple copies produced from one substrate;
h) punching out of the individual copies.

11. Process for the manufacture of a plastic moulding according to Claims 1 to 9, **characterized by** the following steps:
a) provision of a transparent, cold-stretchable, thin plastic film substrate which is sputter-coated on the inside over its entire surface with an ITO layer or optionally with additional conductive, reflective, semi-transparent layers;
b) application of a graphic design in the form of covering or translucent screen print patterns;
c) application of an electroluminescent layer;
d) application of an insulating dielectric layer;
e) application of an electrically conducting base electrode layer by screen printing;
f) three-dimensional shaping at below the softening temperature of the plastic film substrate, of single or multiple copies produced from one substrate;
g) punching out of the individual copies.

12. Process according to Claim 10 or Claim 11, **characterized in that** the shaped plastic film substrate is placed in an injection-moulding die and back-injected with thermoplastic materials, the electrical connection surfaces for the electroluminescent electrodes and viewing windows (if any) being reserved, or the electrical connection surfaces being led out through inserts and/or attachments in the form of electrically conducting contact elements and or film cables.

13. Process according to any one of Claims 10 to 12, **characterized in that** the three-dimensional shaping of the plastic film substrate is performed by isostatic high-pressure forming at a pressure fluid pressure higher than 20 bar with heating to a working temperature below the softening temperature of the plastic material.

14. Process according to any one of Claims 10 to 12, **characterized in that** the three-dimensional shaping is performed by placing the planar, unformed plastic film substrate in an injection-moulding die, the injection-moulding die being heated to a working temperature below the softening temperature of the plastic material, and shaping being performed through predominantly mechanical forming followed by final forming through the thermoplastic injection-moulded compound, or predominantly through the thermoplastic injection-moulded compound itself.

15. Process according to any one of Claims 10 to 12, **characterized in that** the plastic film substrate is three-dimensionally pre-shaped by a mechanical stamping operation, and placed, thus pre-shaped, in an injection-moulding die.

16. Process according to any one of Claims 10 to 15, **characterized in that**, in an intermediate step, a screen-printed layer based on an aqueous polyurethane dispersion and/or solvent-containing polyurethane inks is applied over the base electrode layer to obtain optimal bonding to the thermoplastic compound, the electrical connection surfaces for the electroluminescent electrodes and viewing windows (if any) being reserved.

17. Process according to any one of Claims 10 to 16, **characterized in that**, in addition to various electroluminescent pigments, day-glow pigments are blended with the screen printing pastes of the electroluminescent layer.

18. Process according to any one of Claims 10 to 17, **characterized in that** luminous fields that are nested in each other and separately triggerable are produced by leading out the base electrode connection of an inner luminous field by means of silver conductive paste, using so-called cross-over technology, and by applying additional local insulation printed layers over the outer electrode connections so that these inner base electrode connections can be led out in an electrically insulating manner, and the base electrode connections thus formed can be triggered in an electrically isolated manner.

19. Process according to any one of Claims 10 to 18, **characterized in that** a thin thermoplastic film is laminated over the base electrode layer, and higher temperature loading, and thus in particular unfavourable injecting-on positions at correspondingly high temperatures, can be tolerated in the event of back-injection with thermoplastic materials.

20. Process according to any one of Claims 10 to 19, **characterized in that** the injecting-on of thermoplastic materials is performed not only on the inside, but also on the outside or on both sides so as to produce optical lens effects and light-guiding effects, and using in particular thermoplastic materials based on polycarbonate (PC) and polymethyl methacrylate (PMMA) and possibly also transparent acrilonitrile-butadiene-styrene (ABS), polyamide (PA) and polypropylene (PP) plastic materials or suitable mixtures of the said plastic materials.

21. Process according to any one of Claims 10 to 20, **characterized in that**, instead of applying an insulating dielectric layer and the base electrode layer by means of conductive paste, only the geometry is printed with a view to strengthening the ITO electrode and its electrical connection, and a transparent thin film, metallized on the back, which constitutes the dielectric and the base electrode including reflector, is then laminated-on, with or without aqueous polyurethane dispersion coating.

## Revendications

1. Corps moulé en matière plastique avec un ou plusieurs champs lumineux à action optoélectronique (17) intégrés, comportant au moins dans la zone des champs lumineux (17) un film de matière plastique (1) translucide, étirable à froid et déformé en trois dimensions sur le côté arrière duquel est appliquée une couche conductrice sous la forme d'une électrode de recouvrement transparente (7) qui est elle-même revêtue sur son côté arrière, au moins par endroits, d'une couche électroluminescente (8) et qui est recouverte par une couche isolante (9) derrière laquelle est imprimée une électrode arrière (10) composée d'une couche conductrice qui est elle-même recouverte par une couche isolante (11), étant précisé que le côté intérieur du film de matière plastique (1) est pourvu d'une impression graphique (2), que les champs lumineux (17) sont encastrés dans cette impression graphique (2), que la couche électroluminescente (8) se compose d'une pâte de sérigraphie, qu'une matière thermoplastique (3) est injectée derrière le corps moulé déformé en trois dimensions et que toutes les couches (2 ; 7-11) sont déformables, c'est-à-dire étirables, à une température de travail inférieure à la température de ramollissement du film de matière plastique (1).

2. Corps moulé en matière plastique selon la revendication 1, **caractérisé en ce que** les champs lumineux (17) sont des champs lumineux électroluminescents composés chacun de deux électrodes isolées électriquement l'une par rapport à l'autre, à savoir une électrode de base (10 ; 13) et une électrode de recouvrement (7 ; 14), entre lesquelles est disposée une couche électroluminescente (8).

3. Corps moulé en matière plastique selon la revendication 1 ou 2, **caractérisé en ce que** les électrodes (10, 13 ; 7, 14) sont appliquées elles aussi sous la forme de pâtes de sérigraphie.

4. Corps moulé en matière plastique selon l'une des revendications 1 à 3, **caractérisé en ce que** la couche électroluminescente (8) se compose de substances organiques ou inorganiques qui sont mélangées, sous forme de fine poudre ou d'éléments d'un diamètre typique de 10 à 60 µm microencapsulés, et donc largement insensibles à la vapeur d'eau, à des encres pour sérigraphie aptes à subir une déformation plastique correspondante et de grande valeur diélectrique.

5. Corps moulé en matière plastique selon l'une des revendications 1 à 3, **caractérisé en ce que** les matières thermoplastiques (3) sont injectées derrière le film de matière plastique (1) sur leur côté intérieur ou extérieur.

6. Corps moulé en matière plastique selon l'une des revendications 1 à 4, **caractérisé en ce que** le film de matière plastique (1) est pourvu après la configuration graphique en forme de sandwich, sur le côté intérieur ou extérieur, d'un film thermoplastique supplémentaire (12).

7. Corps moulé en matière plastique selon l'une des revendications 1 à 6, **caractérisé en ce que** l'électrode de recouvrement (7) largement transparente et conductrice d'électricité se compose d'une pâte d'oxyde d'étain dopé à l'indium.

8. Corps moulé en matière plastique selon l'une des revendications 1 à 7, **caractérisé en ce que** le film de matière plastique (1) comporte une électrode de recouvrement en forme de couche d'oxyde d'étain dopé à l'indium appliquée par pulvérisation cathodique (14) ou de couches semi-transparentes réfléchissantes, et cette électrode de recouvrement (14) largement transparente est imprimée, dans des zones de forte déformation ou dans des zones situées à l'extérieur de champs lumineux (17), à l'aide d'une pâte polymère conductrice d'électricité.

9. Corps moulé en matière plastique selon l'une des revendications 1 à 8, **caractérisé en ce que**, à la place de la couche isolante (9) et de l'électrode de base en pâte d'argent (10), un film (13) métallisé, sur son côté arrière, transparent et très mince est appliqué par laminage sur la couche électroluminescente (8) ou sur la couche de recouvrement (11).

10. Procédé pour fabriquer un corps moulé en matière plastique selon les revendications 1 à 9, **caractérisé en ce qu'**il consiste à :
a) préparer un substrat mince, étirable à froid et transparent en forme de film de matière plastique ;
b) appliquer une forme graphique en forme de structures de sérigraphie couvrantes ou translucides ;
c) appliquer une couche d'électrode de recouvrement conductrice d'électricité et largement transparente ;
d) appliquer une couche électroluminescente ;
e) appliquer une couche diélectrique isolante ;
f) appliquer une couche d'électrode de base conductrice d'électricité ;
g) déformer en trois dimensions, au-dessous de la température de ramollissement du substrat en forme de film de matière plastique, des flans individuels ou multiples ;
h) découper les flans individuels.

11. Procédé pour fabriquer un corps moulé en matière plastique selon les revendications 1 à 9, **caractérisé en ce qu'**il consiste à :
a) préparer un substrat mince, étirable à froid et transparent en forme de film de matière plastique qui est enduit sur son côté intérieur, sur toute sa surface, par pulvérisation cathodique, d'une couche d'oxyde d'étain dopé à l'indium ou sélectivement de couches supplémentaires conductrices, réfléchissantes et semi-transparentes ;
b) appliquer une forme graphique en forme de structures de sérigraphie couvrantes ou translucides ;
c) appliquer une couche électroluminescente ;
d) appliquer une couche diélectrique isolante ;
e) appliquer par sérigraphie une couche d'électrode de base conductrice d'électricité ;
f) déformer en trois dimensions, au-dessous de la température de ramollissement du substrat en forme de film de matière plastique, des flans individuels ou multiples ;
g) découper les flans individuels.

12. Procédé selon la revendication 10 ou 11, **caractérisé en ce qu'**on place le substrat en forme de film de matière plastique, une fois déformé, dans un moule à injection et on injecte derrière lui des matières thermoplastiques, les surfaces de raccordement électriques pour les électrodes électroluminescentes et éventuellement des fenêtres restant dégagées ou les surfaces de raccordement électriques étant guidées vers l'extérieur grâce à des inserts et/ou des éléments supplémentaires en forme d'éléments de contact conducteurs d'électricité et/ou de câbles en forme de film.

13. Procédé selon l'une des revendications 10 à 12, **caractérisé en ce que** la déformation en trois dimensions du substrat en forme de film de matière plastique se fait grâce à une déformation haute pression isostatique avec une pression du fluide de pression supérieure à 20 bar et un réchauffement jusqu'à une température de travail inférieure à la température de ramollissement de la matière plastique.

14. Procédé selon l'une des revendications 10 à 12, **caractérisé en ce qu'**on procède à la déformation en trois dimensions en plaçant le substrat en forme de film de matière plastique plan et non déformé dans un moule à injection, lequel moule est chauffé à une température de travail inférieure à la température de ramollissement de la matière plastique, la déformation se faisant grâce à une déformation principalement mécanique et à une déformation définitive consécutive à travers la masse thermoplastique injectée ou principalement à travers la masse thermoplastique injectée elle-même.

15. Procédé selon l'une des revendications 10 à 12, **caractérisé en ce qu'**on préforme en trois dimensions le substrat en forme de film de matière plastique grâce à une opération d'estampage mécanique, et on le place, ainsi préformé, dans un moule à injection.

16. Procédé selon l'une des revendications 10 à 15, **caractérisé en ce que** lors d'une étape intermédiaire, on applique sur la couche d'électrode de base une couche de sérigraphie à base d'une dispersion de polyuréthanne aqueuse et/ou d'encres polyuréthanne contenant un solvant, en vue d'une liaison optimale sur la masse thermoplastique, les surfaces de raccordement électriques pour les électrodes électroluminescentes et éventuellement des fenêtres restant dégagées.

17. Procédé selon l'une des revendications 10 à 16, **caractérisé en ce qu'**on ajoute aux pâtes de sérigraphie de la couche électroluminescente, en plus de différents pigments électroluminescents, des pigments lumineux.

18. Procédé selon l'une des revendications 10 à 17, **caractérisé en ce que** des champs lumineux imbriqués les uns dans les autres et aptes à être commandés séparément sont produits de telle sorte que le raccordement d'électrode de base d'un champ lumineux intérieur est guidé vers l'extérieur à l'aide de pâte en argent conductrice grâce à la technologie dite de transfert, et on applique des couches imprimées isolantes locales supplémentaires sur les raccordements d'électrodes extérieurs, pour que les raccordements d'électrodes de base intérieurs puissent être guidés vers l'extérieur en étant isolés électriquement et que les raccordements d'électrode de base ainsi conçus puissent être commandés séparément, électriquement.

19. Procédé selon l'une des revendications 10 à 18, **caractérisé en ce qu'**un film thermoplastique mince est laminé sur la couche d'électrode de base et ainsi, au cas où on injecte par derrière une matière thermoplastique, une contrainte thermique supérieure et donc en particulier des positions d'injection désavantageuses avec des températures élevées correspondantes peuvent être autorisées.

20. Procédé selon l'une des revendications 10 à 19, **caractérisé en ce que** l'injection à l'aide de matières thermoplastiques se fait non seulement sur le côté intérieur, mais aussi sur le côté extérieur ou sur les deux côtés de telle sorte que des effets optiques de lentille et des effets de conduction de lumière soient produits, et on utilise en particulier des matières thermoplastiques à base de polycarbonate (PC) et de poly(méthacrylate de méthyle) (PMMA) ou des matières plastiques transparentes d'acrylonitrile-styrène-butadiène (ABS), de polyamide (PA) et de polypropylène (PP) ou des mélanges appropriés de ces matières plastiques.

21. Procédé selon l'une des revendications 10 à 20, **caractérisé en ce que**, au lieu d'appliquer une couche diélectrique isolante et la couche d'électrode de base à l'aide d'une pâte conductrice, on imprime simplement la géométrie en vue de renforcer l'électrode d'oxyde d'étain dopé à l'indium et son raccordement électrique, puis on lamine par-dessus, avec ou sans revêtement à base de dispersion de polyuréthanne aqueuse, un mince film transparent qui est métallisé, sur son côté arrière, et qui constitue le diélectrique et l'électrode de base, y compris le réflecteur.
